# EUROPÄISCHE PATENTSCHRIFT

(11) **EP 1 000 261 B1**
(45) Veröffentlichungstag und Bekanntmachung des Hinweises auf die Patenterteilung: **28.02.2001**
(21) Anmeldenummer: 98942646.5
(22) Anmeldetag: 28.07.1998
(51) Int. Cl.: F16C 33/78, F16C 11/04, D03C 1/14

(54) **LAGER, INSBESONDERE FÜR SCHAFTHEBEL IN WEBMASCHINEN**
BEARING, IN PARTICULAR FOR SHAFT LEVERS IN WEAVING MACHINES
PALIER, EN PARTICULIER POUR LEVIERS DE HARNAIS DANS DES METIERS A TISSER

(30) Priorität: 28.07.1997 DE 29713383 U
(43) Veröffentlichungstag der Anmeldung: 17.05.2000
(73) Patentinhaber: INA Wälzlager Schaeffler oHG, 91072 Herzogenaurach (DE)
(72) Erfinder: GÖRGENS, Detlef, D-42929 Wermelskirchen (DE); MEISEL, Harald, D-91083 Baiersdorf (DE)
(86) Internationale Anmeldenummer: EP9804714
(87) Internationale Veröffentlichungsnummer: WO9905426

(56) Entgegenhaltungen:
- EP-A- 0 437 896
- EP-A- 0 602 711
- DE-U- 29 713 383
- US-A- 2 362 456
- US-A- 3 700 297
- US-A- 4 722 616
- US-A- 5 001 831

## Beschreibung

Die Erfindung betrifft ein Lager, insbesondere für Schafthebel in Webmaschinen mit einem scheibenförmigen Lagerinnenring und einem scheibenförmigen Lageraußenring, welche koaxial zueinander angeordnet sind und um mindestens eine Achse eine begrenzte Schwenkbewegung zueinander ausführen, und mit zwei als Dichtringe gestalteten Dichtungen, welche die beiden stirnseitigen Spalte zwischen Lagerinnenring und Lageraußenring abdichten. Ein derartiges Lager ist aus der europäischen Patentanmeldung EP 0 602 711 A bekannt.

Diese Lager werden bei Schafthebeln von Webmaschinen eingesetzt und sind nur Schwenkbewegungen unterworfen. In der Regel sind diese Lager besonders für diesen Anwendungsfall konstruierte Lager, und zwar in Form von Nadellagern, Zylinderrollenlagern, Kugellagern und Gleitlagern. Die Gebrauchsdauer dieser Lager ist nur dann zufriedenstellend, wenn während der Betriebszeit der Webmaschine die Lagerstellen immer ausreichend mit Schmiermittel versorgt sind. Diese Forderung wird jedoch in den meisten Anwendungsfällen nur ungenügend erfüllt, weil der für das Schmiermittel zur Verfügung stehende freie Raum im Lager sehr klein ist, denn es handelt sich in der Regel bei einer Wälzlageranwendung um vollrollige oder vollkugelige Lager, die die notwendige hohe Tragzahl zur Verfügung stellen können. Durch die konstruktiv bedingten engen Platzverhältnisse ist eine wirksame Abdichtung, insbesondere gegen Faserflug nicht vorhanden. Der Anschluß der Lager an eine Zentralschmieranlage ist nicht möglich bzw. sehr aufwendig und damit teuer. Es werden Spalt- bzw. einfache Labyrinthdichtungen und schleifende Lippendichtungen eingesetzt, die jedoch nach einer gewissen Zeit in ihrer Wirkung nachlassen, so daß insbesondere durch das Vorhandensein von Fasern der Austrag von Schmiermittel aus der Lagerrung und damit meist der vorzeitige Lagerausfall aufgrund Mangelschmierung eintritt.

Ein weiterer Nachteil besteht darin, daß die Nadel- und Zylinderrollenlagerausführungen die fertigungsbedingten Fluchtungsfehler der angeschlossenen Bauteile nicht ausgleichen können. Auch Kugellagerausführungen gleichen die Fluchtungsfehler nicht ganz aus.

Der Erfindung liegt daher die Aufgabe zugrunde, ein Lager vorzusehen, das eine hohe Gebrauchsdauer aufweist und darüber hinaus kostengünstig ist.

Diese Aufgabe wird erfindungsgemäß dadurch gelöst, daß die Dichtungen als Dichtringe gestaltet sind, wobei jeder Dichtring einen steifen äußeren Haltering und eine im Durchmesser kleinere Wulst sowie eine den radialen Zwischenraum zwischen beiden überbrückende und mit beiden fest verbundene Membran aus einem elastisch verformbaren Material aus Gummi oder Kunststoff umfaßt, und daß die innere Wulst in einer Ausnehmung des Lagerinnenringes und der äußere Haltering in einer weiteren Ausnehmung des Lageraußenringes unbeweglich gehalten sind. Das elastische Material aus Gummi oder Kunststoff bildet somit am inneren Durchmesser eine Wulst, die bei der Montage des Lagers in eine Ausnehmung des Lagerinnenrings gepreßt werden kann, so daß am Ende dieses Montagevorgangs der äußere Haltering und das elastische Gummi- oder Kunststoffmaterial unbeweglich im Außenring und Innenring des Lagers gehalten sind. Dabei ist die Wulst mittels stirnseitig des Lagers verlaufenden Halbschalen des Schafthebels fest in die Ausnehmung des Lagerinnenrings geklemmt. Von Vorteil bei dieser Ausbildung ist, daß eine hermetische Abdichtung gewährleistet ist, so daß ein Schmiermittelaustritt wirksam verhindert wird und damit auch nicht die negativen Auswirkungen aufgrund der Anwesenheit von Fasern eintreten können. Gleichzeitig wird auch jegliche Verschmutzung des Schmiermittels der Lager von außen unmöglich gemacht. Eine derartige Ausbildung der Dichtung wird dadurch ermöglicht, daß die Lagerungen nur begrenzte Schwenkbewegungen ausführen müssen. Bei Schafthebellagerungen für Webmaschinen treten 600 Hübe pro Minute und mehr auf.

Außerdem wird erfindungsgemäß vorgeschlagen, daß die Dicke der Membran zu dem Haltering hin zunimmt, wodurch sich besonders günstige Verformungsverhältnisse ergeben.

Es kann vorgesehen werden, daß der äußere Haltering in das Gummi- oder Kunststoffmaterial der Membran eingebettet wird. Eine Verbesserung des Formschlusses zwischen dem Haltering und dem Membranwerkstoff kann dadurch erzielt werden, daß der Haltering mit Bohrungen versehen ist, durch die der Membranwerkstoff hindurchtritt.

Die Ausgestaltung der Wulst am inneren Durchmesser der Membrandichtung ist so vorgesehen, daß diese Wulst axial verformt wird und dadurch nicht nur eine Fixierung im Innenring sondern auch eine radiale Spannung erzielt wird, die für die Funktion einer solchen Dichtung positiv ist. Alternativ zu der vorher beschriebenen Dichtungsausführung kann gemäß einer weiteren Ausgestaltung der Erfindung die Dichtungsmembran im mittleren Durchmesserbereich zwischen Haltering und Wulst auch wie eine Ziehharmonika ausgebildet sein. Hierdurch kann die Membran die oszillierenden Bewegungen besser aufnehmen. Die Falten einer entsprechend ausgebildeten Membran können sowohl im Profil als auch am Umfang umlaufend angebracht sein.

Um eine nötige feste Verbindung zwischen dem Haltering und der Membran zu erzielen, ist es vorteilhaft, wenn der Haltering aus Metall hergestellt und die Membran daran anvulkanisiert ist. Die Fixierung des Halterings wird durch einrollen in die dafür vorgeschriebene Nut im Außenring gewährleistet. Alternativ zu der zuvor beschriebenen Dichtungsausführung mit einem Haltering aus Metall ist auch ein Haltering aus einem wiederstandsfähigen Kunststoffmaterial möglich, welcher dann eine Fertigung dieser Dichtungsmembran nach der bekannten Zweikomponentenspritzmethode ermöglicht.

Günstig ist eine Ausbildung des Lagers der Gestalt, daß Lagerinnenring und Lageraußenring mittels Wälzkörpern in Form von Kugeln zueinander gelagert sind, weil bei der Lagerung mittels Kugeln seitlich noch ein begrenztes Verkippen des Lagers möglich ist, so daß die aufgrund von Fluchtungsfehlern vorhandenen Probleme sich nicht auf die Lagerlebensdauer durch einseitig höhere Belastung auswirken können

Es ist jedoch auch möglich, den Lagerinnenring und den Lageraußenring mittels Gleitflächen zueinander zu lagern, wobei diese beispielsweise in Form von Kugelflächen gestaltet sein können. Dabei können den Gleitflächen auch noch reibungsmindernde Auflagen zugeordnet sein. Hierdurch können Zwängungen praktisch ausgeschlossen werden. Die geringen Schwenkwinkel lassen eine solche Lösung als besonders günstig für den Anwendungsfall erscheinen.

Bevorzugte Ausführungsbeispiele der Erfindung sind in der Zeichnung schematisch dargestellt.

Es zeigt:
- Figur 1: einen Halbschnitt durch eine erste Ausführungsform eines Lagers mit der erfindungsgemäßen Abdichtung, die in einen Schafthebel montiert ist,
- Figur 2: eine erfindungsgemäße Dichtung mit einem Haltering aus Metall, der in eine Nut eines Außenrings eingerollt ist,
- Figur 3: ein Gleitlager mit einer erfindungsgemäß ausgebildeten Dichtung,
- Figur 4: ein Nadel- oder Zylinderrollenlager mit einer erfindungsgemäßen Dichtung,
- Figur 5: einen Querschnitt durch eine weitere Ausführungsform einer Dichtung mit einer als Ziehharmonika ausgebildeten Membran,
- Figur 6: einen in Umfangsrichtung verlaufenden Teilschnitt durch die Membran gemäß Linie VI-VI in Figur 5 und
- Figur 7: eine Lagerung bei der die Membran mit konzentrisch verlaufenden Wellen versehen ist.

In den Zeichnungen sind die gleichen Teile für die verschiedenen Ausführungsformen jeweils mit der gleichen Basiszahl, jedoch jeweils erhöht um die Zahl 100 bezeichnet.

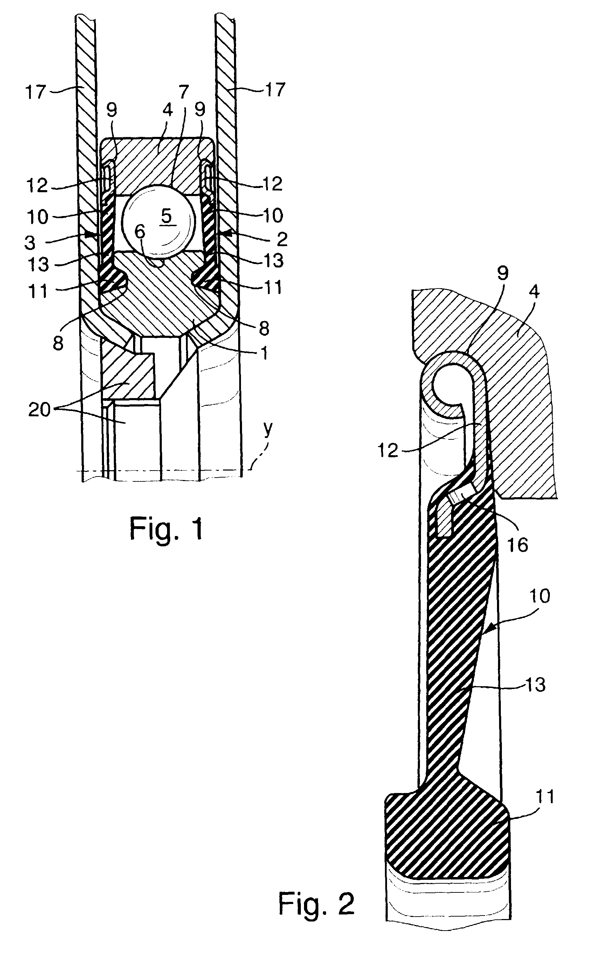

In der Figur 1 ist ein Schafthebellager in Form eines Wälzlagers mit einem Lagerinnenring 1 und einem Lageraußenring 4 dargestellt, wobei beide mittels Kugeln 5, die in Innenlaufbahnen 6 und Außenlaufbahnen 7 abwälzen, um die Achse Y beweglich zueinander gehalten sind. Im eingebauten Zustand des Lagers können der Lagerinnenring 1 und der Lageraußenring 4 aufgrund der Einbauverhältnisse nur begrenzte Bewegungen um die Achse Y, und zwar intermittierend ausführen. Es sind zur Abdichtung des Dichtspaltes an einer ersten Stirnseite 2 und einer zweiten Stirnseite 3 des Wälzlagers Dichtringe 10 vorgesehen, die nachfolgend näher beschrieben sind.

Danach umfaßt jeder Dichtring 10 eine innere Wulst 11 und einen äußeren Haltering 12 sowie eine sich in radialer Richtung zwischen beiden erstrekkende Membran 13, die gemeinsam mit der Wulst 11 ausgebildet und am Haltering 12 festgelegt ist. Der Haltering 12 ist aus Metall hergestellt und die Membran 13, die aus einem Kunststoff oder Gummiwerkstoff besteht, ist daran fest anvulkanisiert. Der äußere Haltering 12 ist in einer entsprechend gestalteten Ausnehmung 9 des äußeren Lagerrings 4 drehfest aufgenommen. Dabei erfolgt die Festlegung durch Reibschluß. Stirnseitig des Lagers verlaufen Halbschalen eines Schafthebels 17, die über eine Verschraubung 20 miteiander verspannt sind. Dabei legen sich die Halbschalen des Schafthebels 17 stirnseitig an den Lagerinnenring 1 an und pressen die Wulst 11 der jeweiligen Dichtung in eine Ausnehmung 8 des Lagerinnenrings 1. Auf diese Weise sind die beiden Dichtringe 10 reibschlüssig am Lagerinnenring 1 fixiert. Von der Wulst 11 aus erstreckt sich radial nach außen die bis zum Haltering 12 reichende Membran 13.

In der Figur 2 ist ein Dichtring 10 dargestellt, der im wesentlichen mit dem in Figur 1 dargestellten Dichtring übereinstimmt. Dabei verdeutlicht die Figur 2, daß ein in Richtung der Membran 13 weisender Abschnitt des Halterings 12 vollständig in den Kunststoff oder Gummiwerkstoff eingebettet ist. Darüber hinaus weist der Haltering im Bereich dieses Abschnittes mehrere über seinen Umfang verteilte Bohrungen 16 auf, die von dem Gummi oder Kunststoff ausgefüllt sind, so daß sich eine das Drehmoment aufnehmende formschlüssige Verbindung ergibt.

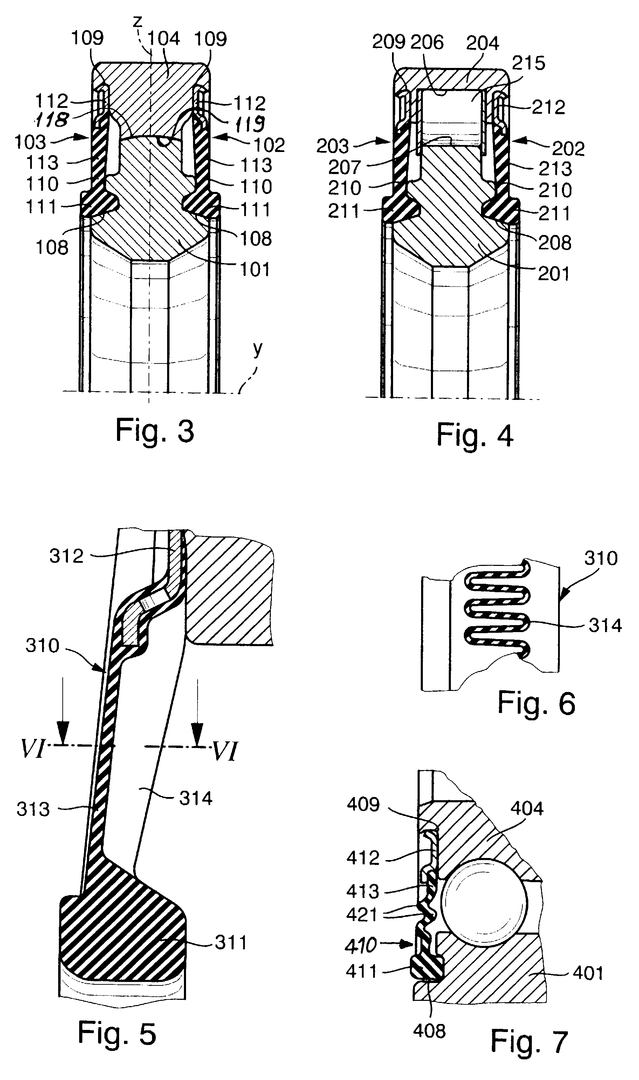

Figur 3 zeigt eine abgewandelte Ausführungsform insofern, als der Lagerinnenring 101 und der Lageraußenring 104 zur gegenseitigen Gleitlagerung eine Kugelaußenfläche 118 bzw. Kugelinnenfläche 119 besitzen, so daß Bewegungen sowohl um die Achse Y als auch um die Achse Z ausgeführt werden können. Zu den beiden Stirnseiten 102 und 103 hin erfolgt die Abdichtung über Dichtringe 110, die in der Ausgestaltung denen gemäß den Figuren 1 und 2 entsprechen.

Figur 4 zeigt eine abgewandelte Ausführungsform des Lagers, bei der ein Lagerinnenring 201 und ein Lageraußenring 204 jeweils eine zylindrische Innenlaufbahn 206 sowie eine zylindrische Außenlaufbahn 207 besitzen. Zwischen der Innenlaufbahn 206 und der Außenlaufbahn 207 sind zylindrische Wälzkörper 215 in Form von Nadeln oder Zylinderrollen angeordnet, so daß der Lagerinnenring 201 gegenüber dem Lageraußenring 204 um die Achse Y drehbeweglich geführt ist. Auch hier sind zur Abdichtung Dichtungen 210 montiert, die im wesentlichen den in den Figuren 1 und 2 dargestellten Dichtungen entsprechen

Die Figuren 5 und 6 zeigen Möglichkeiten, eine Dichtungsmembran 314 derart auszubilden, daß eine Überbeanspruchung des Dichtungswerkstoffs vermieden wird. Zu diesem Zweck ist, wie insbesondere aus der Figur 6 hervorgeht, die Dichtungsmembran 314 ziehharmonikaartig ausgebildet.

Schließlich zeigt die Figur 7 einen Dichtring 410, bei dem die Membran 413 in Umfangsrichtung verlaufende Wellen 421 aufweist. Durch diese Wellen 421 können ebenfalls Überbeanspruchungen der Membran 413 vermieden werden. Darüber hinaus besteht auch die Möglichkeit, diese Wellen nicht konzentrisch anzuordnen, sondern sie vom inneren Bereich der Membran 413 in Richtung des äußeren Bereichs schneckenförmig verlaufen zu lassen.

### Bezugszeichenliste

- 1, 101, 201, 401: Lagerinnenring
- 2, 102, 202: erste Stirnseite
- 3, 103, 203: zweite Stirnseite
- 4, 104, 204, 404: Lageraußenring
- 5: Kugeln
- 205: zylindrische Wälzkörper
- 6: Innenlaufbahn
- 7: Außenlaufbahn
- 8, 108, 208, 408: Ausnehmung im Lagerinnenring
- 9, 109, 209, 409: Ausnehmung im Lageraußenring
- 10, 110, 210, 310, 410: Dichtring
- 11, 111, 211, 311, 411: Wulst
- 12, 112, 212, 312, 412: äußerer Haltering
- 13, 113, 213, 313, 413: Membran
- 314: ziehharmonikaartiger Abschnitt der Membran
- 414: wellenförmiger Abschnitt der Membran
- 16, 316: Bohrungen
- 17: Schafthebel
- 118: Kugelfläche von 101
- 119: Kugelinnenfläche von 104
- 20: Verschraubung des Schafthebels 17 mit dem Lagerrinnenring 1
- 421: Wellen in der Membran 413

## Patentansprüche

1. Lager für Schafthebel (17) in Webmaschinen mit einem scheibenförmigen Lagerinnenring (1, 101, 201, 401) und einem scheibenförmigen Lageraußenring (4, 104, 204, 404), welche koaxial zueinander angeordnet sind und um mindestens eine Achse eine begrenzte Schwenkbewegung zueinander ausführen, und mit zwei als Dichtringe (10, 110, 210, 310, 410) gestalteten Dichtungen, welche die beiden stirnseitigen Spalte zwischen Lagerinnenring (1, 101, 201, 401) und Lageraußenring (4, 104, 204, 404) abdichten, **dadurch gekennzeichnet,** daß jeder Dichtring (10, 110, 210, 310, 410) einen steifen äußeren Haltering (12, 112, 212, 312, 412) und eine im Durchmesser kleinere Wulst (11, 111, 211, 311, 411) sowie eine den radialen Zwischenraum zwischen beiden überbrückende und mit beiden fest verbundene Membran (13, 113, 213, 313, 413) aus einem elastisch verformbaren Material aus Gummi oder Kunststoff umfaßt, deren Dikke zu dem Haltering (12, 112, 212) hin zunimmt und daß die innere Wulst (11, 111, 211, 311, 411) in einer Ausnehmung (8, 108, 208, 408) des Lagerinnenringes (1, 101, 201, 401) und der äußere Haltering (12, 112, 212, 312, 412) in einer weiteren Ausnehmung (9, 109, 209, 409) des Lageraußenringes (4, 104, 204, 404) unbeweglich gehalten sind, wobei die Wulst (11, 111, 211, 311, 411) mittels stirnseitig des Lagers verlaufender Halbschalen des Schafthebels (17) fest in die Ausnehmung (8, 108, 208) des Lagerinnenrings (1, 101, 201) geklemmt ist.

2. Lager nach Anspruch 1, **dadurch gekennzeichnet,** daß die Membran (13, 113, 213, 313, 413) formschlüssig mit dem Haltering (12, 112, 212, 312, 412) verbunden ist, wobei vorzugsweise der Formschluß durch Bohrungen (16, 316) im Haltering (12, 312) hergestellt wird, die von dem Material der Membran (13, 313) durchsetzt sind.

3. Lager nach Anspruch 1, **dadurch gekennzeichnet,** daß der mittlere Bereich der Membran (313), der zwischen dem äußeren Haltering (312) und der Wulst (311) liegt, in Ziehharmonikaform (314) ausgebildet ist, so daß größere Schwenkwinkel um die Y-Achse ermöglicht werden.

4. Lager nach Anspruch 1, **dadurch gekennzeichnet,** daß der mittlere Bereich der Membran (413) im Profil wellenförmig ausgebildet ist, wobei die Wellen entweder konzentrisch oder spiralförmig verlaufend angeordnet sein können.

5. Lager nach Anspruch 1, **dadurch gekennzeichnet,** daß der Haltering (12, 112, 212, 312, 412) aus Metall besteht und die Membran (13, 113, 213, 313, 413) daran anvulkanisiert ist.

6. Lager nach Anspruch 1, **dadurch gekennzeichnet,** daß der Haltering (12, 112, 212, 312, 412) durch Reibschluß in der Ausnehmung (9, 109, 209, 409) unbeweglich gehalten ist.

7. Lager nach Anspruch 1, **dadurch gekennzeichnet,** daß der Haltering durch Formschluß in der Ausnehmung gehalten ist.

8. Lager nach einem der Ansprüche 1 bis 7, **dadurch gekennzeichnet,** daß der Lagerinnenring (1) und der Lageraußenring (4) mittels Wälzkörpern in Form von Kugeln (5) zueinander gelagert sind.

9. Lager nach einem der Ansprüche 1 bis 7, **dadurch gekennzeichnet,** daß der Lagerinnenring (101) und der Lageraußenring (104) mittels Gleitflächen (118, 119) zueinander gelagert sind

10. Lager nach einem der Ansprüche 1 bis 7, **dadurch gekennzeichnet,** daß der Lagerinnenring (201) und der Lageraußenring (204) mittels Wälzkörpern (205) in Form von zylindrischen Rollen oder Nadeln zueinander gelagert sind

11. Lager nach Anspruch 9, **dadurch gekennzeichnet,** daß den Gleitflächen (118, 119) reibungsmindernde Auflagen zugeordnet sind.

## Claims

1. Bearing for shaft levers (17) in weaving machines, said bearing having a disk-shaped inner bearing ring (1, 101, 201, 401) and a disk-shaped outer bearing ring (4, 104, 204, 404), which rings are arranged coaxial to each other and execute a limited pivoting motion relative to each other about at least one axis, the bearing further having two seals configured as sealing rings (10, 110, 210, 310, 410) that seal the two end gaps between the inner bearing ring (1, 101, 201, 401) and the outer bearing ring (4, 104, 204, 404), **characterised in that** each sealing ring (10, 110, 210, 310, 410) comprises a stiff outer retaining ring (12, 112, 212, 312, 412) and a bead (11, 111, 211, 311, 411) of smaller diameter as well as a diaphragm (13, 113, 213, 313, 413) made of an elastically deformable material of rubber or of a plastics material which bridges the intermediate radial space between the two and is firmly connected to both, the thickness of the diaphragm increasing in the direction toward the retaining ring (12, 112, 212), the inner bead (11, 111, 211, 311, 411) is held fixed in a recess (8, 108, 208, 408) of the inner bearing ring (1, 101, 201, 401) and the outer retaining ring (12, 112, 212, 312, 412) is held fixed in a further recess (9, 109, 209, 409) of the outer bearing ring (4, 104, 204, 404), the bead (11, 111, 211, 311, 411) being firmly clamped into the recess (8, 108, 208) of the inner bearing ring (1, 101, 201) by semi-shells of the shaft lever (17) that extend at each end of the bearing.

2. Bearing according to Claim 1, **characterised in that** the diaphragm (13, 113, 213, 313, 413) is connected to the retaining ring (12, 112, 212, 312, 412) by positive engagement that is preferentially established by bores (16, 316) in the retaining ring (12, 312) which are penetrated by the material of the diaphragm (13, 313).

3. Bearing according to Claim 1, **characterised in that** the central region of the diaphragm (313) that is situated between the outer retaining ring (312) and the bead (311) is configured in the form of an accordion so that larger angles of pivot about the Y-axis are made possible.

4. Bearing according to Claim 1, **characterised in that** the central region of the diaphragm (413) is configured with an undulatory profile, wherein the undulations can be arranged to extend either concentrically or spirally.

5. Bearing according to Claim 1, **characterised in that** the retaining ring (12, 112, 212, 312, 412) is made of metal and the diaphragm (13, 113, 213, 313, 413) is vulcanised thereon.

6. Bearing according to Claim 1, **characterised in that** the retaining ring (12, 112, 212, 312, 412) is held fixed in the recess (9, 109, 209, 409) by frictional engagement.

7. Bearing according to Claim 1, **characterised in that** the retaining ring is held in the recess by positive engagement.

8. Bearing according to one of the Claims 1, to 7, **characterised in that** the inner bearing ring (1) and the outer bearing ring (4) are mounted on each other by means of rolling elements in the form of balls (5).

9. Bearing according to one of the Claims 1, to 7, **characterised in that** the inner bearing ring (101) and the outer bearing ring (104) are mounted on each other by means of sliding surfaces (118, 119).

10. Bearing according to one of the Claims 1 to 7, **characterised in that** the inner bearing ring (201) and the outer bearing ring (204) are mounted on each other by means of rolling elements (205) in the form of cylindrical rollers or needles.

11. Bearing according to Claim 9, **characterised in that** friction-reducing coatings are associated to the sliding surfaces (118, 119).

## Revendications

1. Roulement pour des leviers de lames (17) de métiers à tisser, comprenant une bague interne de roulement (1, 101, 201, 401) en forme de disque et une bague externe de roulement (4, 104, 204, 404) en forme de disque, lesdites bagues de roulement étant agencées coaxialement, l'une à l'autre, et exécutent un mouvement de pivotement relatif limité autour d'au moins un axe, ledit roulement comprenant, de plus, deux garnitures sous la forme de bagues d'étanchéité (10, 110, 210, 310, 410) qui rendent étanches les deux intervalles frontaux situés entre la bague interne (1, 101, 201, 401) et la bague externe (4, 104, 204, 404) de roulement, **caractérisé en ce que** chaque bague d'étanchéité (10, 110, 210, 310, 410) comprend un anneau rigide externe de retenue (12, 112, 212, 312, 412) et un bourrelet (11, 111, 211, 311, 411) de plus petit diamètre ainsi qu'un diaphragme (13, 113, 213, 313, 413) qui franchit l'espace radial intermédiaire entre les deux en étant fixement relié à eux, ledit diaphragme étant fait en une matière élastiquement déformable en caoutchouc ou en plastique dont l'épaisseur augmente en allant vers l'anneau de retenue (12, 112, 212), et en ce que le bourrelet intérieur (11, 111, 211, 311, 411) est retenu de manière immobile dans un évidement (8, 108, 208, 408) de la bague interne (1, 101, 201, 401) du roulement, alors que l'anneau externe de retenue (12, 112, 212, 312, 412) est immobilisé dans un autre évidement (9, 109, 209, 409) prévu dans la bague externe (4, 104, 204, 404) du roulement, ledit bourrelet (11, 111, 211, 311, 411) étant fixement serré dans l'évidement (8, 108, 208) de la bague interne (1, 101, 201) du roulement par des demi-coques du levier de lame (17) qui s'étendent du chaque côté frontal du roulement.

2. Roulement selon la revendication 1, **caractérisé en ce que** le diaphragme (13, 113, 213, 313, 413) est relié à l'anneau de retenue (12, 112, 212, 312, 412) par concordance de forme qui est établie, de préférence, par des alésages (16, 316) dans l'anneau de retenue (12,,312) qui sont pénétrés du matériau du diaphragme (13, 313).

3. Roulement selon la revendication 1, **caractérisé en ce que** la région centrale du diaphragme (313) située entre l'anneau externe de retenue (312) et le bourrelet (311) est configurée sous la forme d'un accordéon, de sorte que des angles de pivotement plus importants autour de l'axe Y sont possibles.

4. Roulement selon la revendication 1, **caractérisé en ce que** la région centrale du diaphragme (413) a un profil ondulé, les ondulations étant agencées concentriquement ou en spirale.

5. Roulement selon la revendication 1, **caractérisé en ce que** l'anneau de retenue (12, 112, 212, 312, 412) est fait en métal et le diaphragme (13, 113, 213, 313, 413) est vulcanisé dessus.

6. Roulement selon la revendication 1, **caractérisé en ce que** l'anneau de retenue (12, 112, 212, 312, 412) est retenu immobile dans l'évidement (9, 109, 209, 409) par engagement par frottement.

7. Roulement selon la revendication 1, **caractérisé en ce que** l'anneau de retenue est retenu dans l'évidement par concordance de forme.

8. Roulement selon l'une des revendications 1 à 7, **caractérisé en ce que** la bague interne (1) du roulement et la bague externe (4) du roulement sont montées, l'une sur l'autre, par des corps roulants sous la forme de billes (5).

9. Roulement selon l'une des revendications 1 à 7, **caractérisé en ce que** la bague interne (101) du roulement et la bague externe (104) du roulement sont montées, l'une sur l'autre, par l'intermédiaire de surfaces de glissement (118, 119).

10. Roulement selon l'une des revendications 1 à 7, **caractérisé en ce que** la bague interne (201) du roulement et la bague externe (204) du roulement sont montées, !'une sur l'autre, par l'intermédiaire de corps roulants (205) en forme de galets cylindriques ou d'aiguilles.

11. Roulement selon la revendication 9, **caractérisé en ce que** les surfaces de glissement (118, 119) sont munies de recouvrements antifrottants.
